Europäisches Patentamt

(19) European Patent Office

Office européen des brevets

(11) Publication number: **0 138 900 B1**

## EUROPEAN PATENT SPECIFICATION
### published in accordance with Art. 158(3) EPC

(45) Date of publication of patent specification: **24.07.91**  (51) Int. Cl.⁵: **B29C 33/00**

(21) Application number: **84901212.5**

(22) Date of filing: **23.03.84**

(86) International application number:
**PCT/HU84/00019**

(87) International publication number:
**WO 84/03656 (27.09.84 84/23)**

(54) **PREFABRICATED DIE PLATES AND DIE PLATE SYSTEM, PARTICULARLY FOR CAVITY DIES.**

(30) Priority: **25.03.83 HU 102283**

(43) Date of publication of application:
**02.05.85 Bulletin 85/18**

(45) Publication of the grant of the patent:
**24.07.91 Bulletin 91/30**

(84) Designated Contracting States:
**AT BE CH DE FR GB LI LU NL SE**

(56) References cited:
**EP-A- 30 247**
**DE-A- 280 288**
**US-A- 3 871 611**
**US-A- 4 150 931**

**"Werkzeugbau für die Kunststoffverarbeitung", Carl Hanser Verlag München Wien 1979**

(73) Proprietor: **BOROS, György**
**Tapolcsanyi u. 14**
**H-1022 Budapest(HU)**

Proprietor: **GULACSY, Robert**
**Vesszösfia J.u. 7**
**H-1212 Budapest(HU)**

Proprietor: **LASZLO, György**
**Bakats ter 9**
**H-1092 Budapest(HU)**

Proprietor: **NARANCSIK, Pal**
**Csövar u. 1/f**
**H-1151 Budapest(HU)**

(72) Inventor: **BOROS, György**
**Tapolcsanyi u. 14**
**H-1022 Budapest(HU)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

"Kunststoff-Taschenbuch", Carl Hanser Verlag München Wien 1974

"Der Spritzgiess-Werkzeugbau", Carl Hanser Verlag München Wien, 1982

"Plastics Engineering Handbook" of the Society of the Plastics Industry, Inc., van Nostrand Reinhold Company, 1976

Inventor: **GULACSY, Robert**
Vesszösfia J.u. 7
**H-1212 Budapest(HU)**
Inventor: **LASZLO, György**
**Bakats ter 9**
**H-1092 Budapest(HU)**
Inventor: **NARANCSIK, Pal**
**Csövar u. 1/f**
**H-1151 Budapest(HU)**

(74) Representative: **Prechtel, Jörg et al**
**Patentanwälte H. Weickmann, Dr. K. Fincke**
**F.A. Weickmann, B. Huber Dr. H. Liska, Dr. J.**
**Prechtel Möhlstrasse 22 Postfach 860 820**
**W-8000 München 86(DE)**

## Description

The invention relates to a die plate system suitable for assembling cavity dies with at least partly repetitive modul elements for production particularly of synthetic and/or rubber products, which die plate system is inserted into a regular element system and provides for a predetermined dimension series in respect of characteristic external dimensions and connecting elements for leading fastening and locating.

Several types of prefabricated, standardized die plate systems are known. There is a Continually growing demand for dies assembled of prefabricated standard elements and based on principle of construction sets. Such know die systems (e.g. DME, EJS, Norma Strack Normalien, Zimmerman, SUSTAN, HASCO) have some considerable drawbacks and shortcomings, resp. in spite of significant developing work and several advantages in use. These die forming elements e.g. standardized mould plates, cavity plates, clamping plates or risers are formed from the beginning in the light of the scope of employment.

In such a way the specific mould of a die casting machine is inoperable for another purpose, generally. By reason of leader holes formed in the mould plates, the mould plates have a relatively small net area and the peripheral zone determined by the leader holes comprises unnecessary material in large quantities. The forming of forming parts of the mould plates is still extremely laboursome, because the mould bases available as elements are being composed of allside-processed plates and elements of the leading/fastening subsystem only. By the forming of said forming parts - which requires high qualified work - holes or hole systems for conduction of tempering medium shall be prepared. These holes are being formed with slot boring in the plate inserts of the known die systems. The tempering medium channels cannot follow the shape of the product to be made, especially it has a curved surface. Consequently, cooling and heating are irregular and the material structure of the product cannot be homogeneous and required dimensions are inaccurate. Holes of ejector system and leader pin bushings should be turned out subsequently. The same holds with respect of forming of conduits of material feeding, injector seats and antechambers, resp.

A prefabricated die plate system according to the preamble of claim 1 is known (K. STOECKHERT "Werkzeugbam für die Kunststoffverarbeitung", 1979 CARL HANSER VERLAG, München, Wien, pages 429 to 437). This citation shows a die plate system, wherein the individual plates are standardized with respect to outer dimensions of the plates and to the arrangement of holes serving for receipt of guide bolts, guide bushes and centering sleeves. These bores are furnished by the producer of the plates and allow the producer of the mould tool to easily combine these plates and mount the tool. However each of these prefabricated plates has to be provided with recesses or holes for establishing the mould cavity and for receiving various inserts comprising material not the system, material distributor hole system, hot runner system and ejector system.

The object of the invention is to provide a die plate system with a higher degree of prefabricated and reduced manufacturing costs. This object is solved by the features of claim 1.

The invention is based on the perception that considerably cheaper end-product and die, resp., can be produced in many instances from more expensive but more accurate and better prefabs, if the prefabricated components come more and more near the final form, dimensions and other considerable features in strength, mechanical distribution, etc. of the ready-for-use components. Further, considerably more functional subsystems and die plates, resp. can be produced by prefabrication, and well-known expensive tool-making can be reduced to a minimum through breaking down of cavity dies, particularly, moulds in functional subsystems and grouping of certain system elements on the basis of the above.

In the interest of standardized prefabrication of die elements which cannot be produced by prefabrication in the known die element systems, the die plate system according to the invention is based on die insert subsystem for shaping of the proper forming surfaces. Parts of this subsystem are the inserts themselves, which can be fitted in holes of the die plates made in an energy- and material-saving process, during assembling of the die. Further parameters of the system are the dimensions of said inserts, graduation and geometrical arrangement of the holes formed in the die plates, and the number of the inserts. These parameters all together determine the graduation, dimension and number of connecting elements of the other subsystems, e.g. the material conduit subsystem, the tendering duct subsystem, the ejector subsystem, the leading/fastening and holding subsystems. Consequently, higher readiness of prefabrication is realized. In the light of the thickness dimension series the inserts can be prefabricated in some degree as well, and put into circulation on the basis of the diameter-assortment and with or without heat-treatment. The inserts inside of the die can be used as mould plates, cavity plates, clamping plates, ejector retainer plates, ejector plates, tool holder, risers, bushes for hot runner nozzle and cooling plugs, resp., further for forming and holding of functional elements of the material conduit subsystem e.g. the antechambers, central mould nozzle, material conduits, and hot runner nozzles in given case.

By the application of said inserts a new die plate system can be produced, including the tempering duct subsystem, ejector subsystem, leading/fastening subsystem and the known elements thereof.

Based on the above recognition, the invention provides prefabricated die plates, which contain standardized groups of holes suitable for fitted receiving of inserts forming and including, resp. elements of several functional subsystems.

Further preferred embodiments of the die plates according to the invention are provided with a moulded duct system for tempering medium, formed in immediate range of certain holes. This duct system contains channel-like ducts dished in the cylindrical surfaces of certain holes, wherein said ducts have a single - or multiplex thread spiral form. The ducts form a closed, sealed channel around the cavities formed in the inserts, when the inserts are fitted in the holes and ensure an advantageous isothermal temperature range during the required die casting process.

Of the die plates according to the invention several dies, particularly cavity dies as moulds (as well as of hot runner type), compression moulds (also with antechamber), rubber vulcanizer moulds (also for through-feed method), moulds for integrated polyurethane foam can be assembled in wide selection by minimum work. The construction according to functional subsystems enables the initiation of unstandardized die parts and die elements, resp. into the standardization. Plates of die casing, including holes of the leading/fastening subsystems and receiving holes of die inserts, and the tempering duct system formed around said holes can be provided in an interchangeable design. Providing a complete die means, the forming surfaces (e.g. cavity or core) shall be performed only in the insert and the die shall be assembled by means of the prefabricated die plates and other standardized die elements. The high degree of variability is an important point during the performance of the system. Any die casing for any type of dies can be assembled of three plate elements of the casing subsystem only. The dimensions of the insert to be used shall be determined in light of the dimensions of the product to be made, and the standardized die plate dimensions can be selected depending on the core number and the insert dimensions, resp.

The application of high-precision casting in the production of the die plates and the subsequent sizing of the adjusting surfaces of the precision-cast prefabricated system elements result in significant saving in material and cutting work. The use of casting technology results in the advantage that a wide range of material can be used for preparing of die plates contrary to rolled steel used in the tool blade production. In all cases the optimal and cheapest material quality can be chosen. The economy of extra quality materials increases since the basic principle of the system according to the invention is the application of inserts. This, combined with the high-grade prefabrication, enables programmable production and economical mass production, the quantity and the value of the die plate assortment can be optimized easily. Prefabrication of receiving holes of the die inserts enables the development of the forming surfaces by modern and productive processes. Hardened and ground inserts for spark eroding process are needed. By galvano-plastic process or electrolythical separation inserts can be formed. It is possible to form die inserts of graphite, beryllium bronze, or other modern materials.

The die engineering work can be reduced to a minimum because of high-grade prefabrication of the die plates and the die plate system according to the invention. A considerable part of the die engineering work is constituted by selection of the elements and assembling of the die casing from said elements. Pre-printed detail-drawings and assembling-drawings can be used, in which die parts to be formed (ejector system, forming parts, etc.) subsequently can be drawn in.

The invention is further explained by reference to preferred embodiments illustrated in the accompanying drawings, wherein:

Figure 1
is a top-view of a detail of a forming plate;

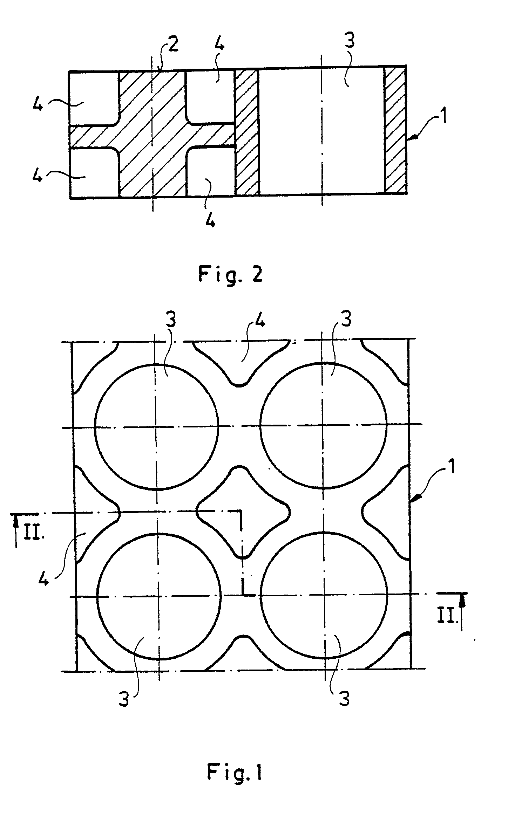

Figure 2
shows a section taken along the plane II-II of the forming plate shown in Fig. 1;

Figure 3
is an enlarged part section of an insert receiving hole of a forming plate provided with tempering medium duct;

Figure 4
shows a section taken along the plane IV-IV of a die plate shown in Fig. 5, formed as an insert plate comprising a prefabricated hot runner system of a 12-core die casting machine;

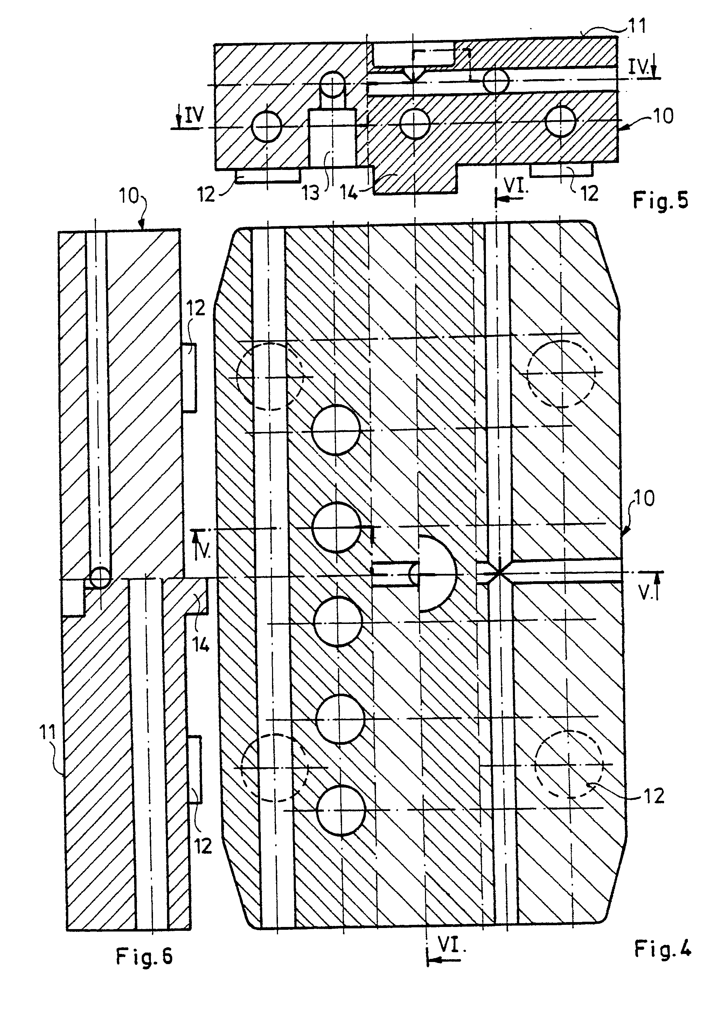

Figure 5
is a section taken along the plane V-V of the insert plate shown in Fig. 4;

Figure 6
is a section taken along the plane VI-VI of the insert plate shown in Fig. 4;

Figure 7
shows a top-view of a prefabricated insert plate for the ejector system of the same 12-core die casting machine;

Figure 8

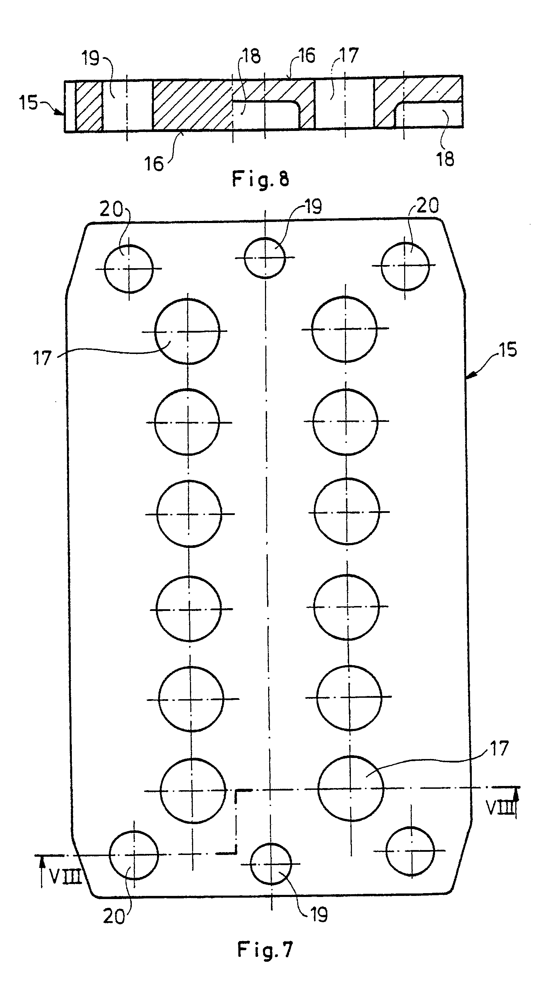

is a section taken along the plane VIII-VIII of the insert plate shown in Fig. 7;

Figure 9 shows a view of a prefabricated die plate according to the invention formed as a holding plate provided with cast centring shoulder;

Figure 10 is a section taken along the plane X-X of the die plate shown in Fig. 9;

Figure 11 is a schematic top-view of a prefabricated die plate formed as a holding plate provided with cast distance shoulder;

Figure 12 shows a section taken along the plane XII-XII of the die plate shown in Fig. 11;

Figure 13 is a view of the die plate formed as a forming plate provided with precast sized holes for the forming inserts and the leader pins of the leading/fastening system;

Figure 14 is a section taken along the plane XIV-XIV of the die plate shown in Fig. 13 and

Figure 15 and 16 are schematic views of a distance insert element substituting for the cast distance shoulder shown in Fig. 11.

Figures 1 and 2 show details of a die plate 1 according to the invention. The die plate 1 is formed as a various cross-section cast with material-saving recesses 4 and produced from a high-precision cast prefab, by reworking (grinding) of parallel adjusting surfaces 2 and holes 3 for fitted receiving of several functional die elements (not shown), particularly inserts serving for shaping of forming surfaces. The depth of the recesses 4 can differ from the one shown in the drawings.

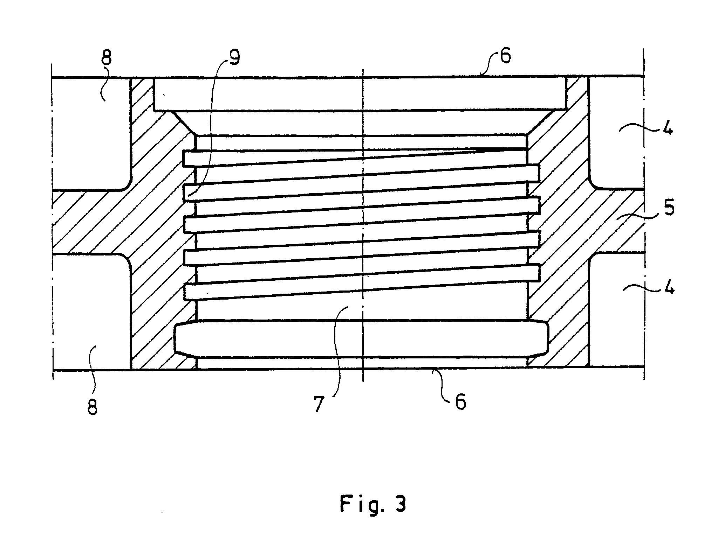

In the cylindrical surface of a hole 7 of a die plate 5 shown in Figure 3 a spiral duct 9 as a part of the tempering medium duct system is dished. By fitted receiving of an insert in the hole 7, the duct 9 form a closed, sealed channel around the insert and ensures an advantageous isothermic heat dispersion around the insert and product to be tempered, resp. Material saving recesses 8 and ground, parallel adjusting surfaces 6 are in full view.

Figures 4 to 6 show several section of a die plate formed as an insert plate 10 comprising a hot runner system of a 12-core die casting machine in a form of well-sized holes. The insert plate 10 includes grinded adjusting surfaces 11, surface-ground bearings 12, holes 13 and a centring shoulder 14. The hot runner system can be formed out during the prefabrication by means of precast tube elements or core forming processes. Although not shown in Figures, the insert plate 10 can be formed out of various cross-section.

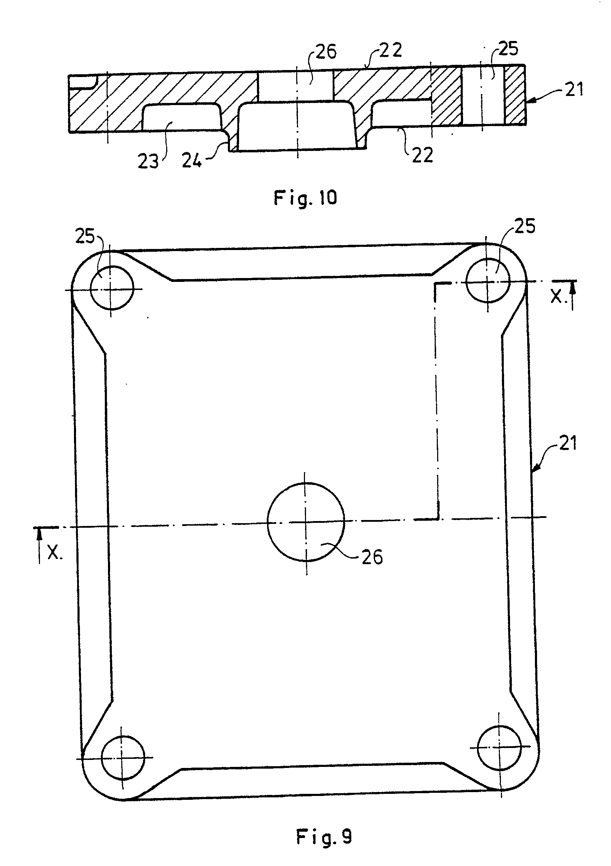

Figures 7 and 8 show a further insert plate 15 for the ejector system of the 12-core die casting machine. Said insert plate 15 has parallel, ground adjusting surfaces 16, insert receiving holes 17, fitted through holes 19 and 20 for pins of a leading/fastening subsystem and ejector subsystem and, in this example, one-sided recesses 18.

Figures 9 and 10 show partly a view partly a section of a die plate according to the invention formed as a holding plate 21, which is provided with a cast centering shoulder 24. The holding plate 21 is limited by ground adjusting surfaces 22. In one of the adjusting surfaces 22 a material-saving recess 23 is forced. A central hole 26 in the holding plate 21 enables the extension of the central sprue of the die casting machine (not shown) into the mould. Ground holes 25 serve for receiving clamping pins of the known leading/fastening subsystem.

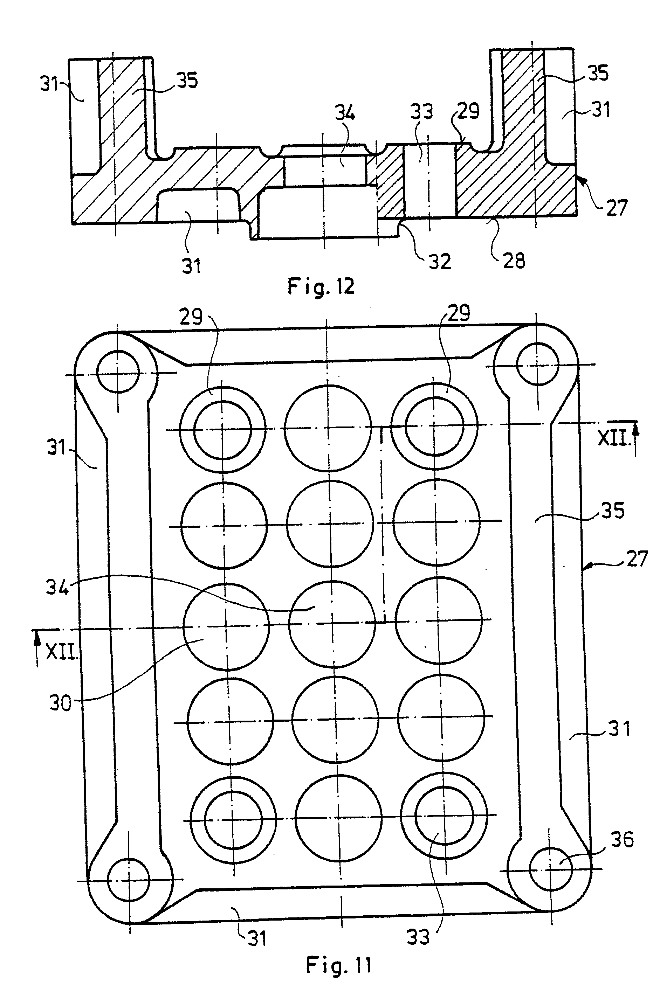

Figures 11 and 12 show a view and a section, resp. of a holding plate 27 provided with cast distance shoulder 35 on both edges, and having ground holes 30 for fitted receiving of functional inserts, ground parallel adjusting surfaces 28 the bottom of which is a continual plane, and bearings 29. Four inner corner holes 33 are precast leading holes for the insert plates of the ejector system. A central hole 34 concentric to a centring shoulder 32 enables the extension of the central sprue of the die casting machine into the mould. Material-saving recesses 31 and receiving holes 36 for clamping pins of the leading/fastening subsystem are in full view as well.

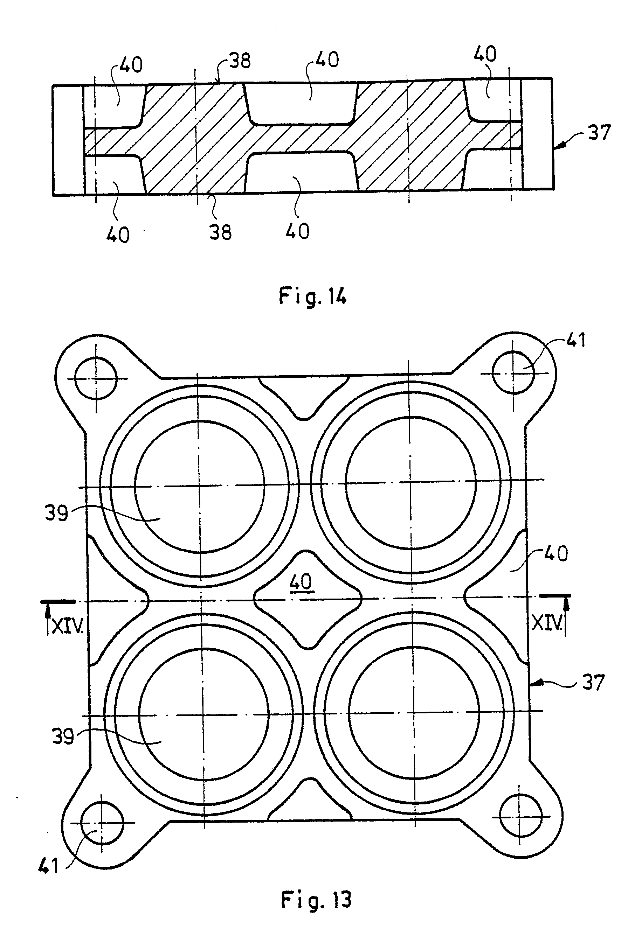

In a prefabricated precast die plate according to the invention and shown in Figures 13 and 14, formed as a 4-core forming plate 37 holes 39 are formed. The holes 39 comprise spiral ducts dished in the ground cylindrical surfaces (shown in Fig. 3) which ducts form some parts of a tempering medium duct system. Corner holes 41 lead clamping elements of the leading/fastening subsystem. The forming plate 37 is limited by parallel adjusting surfaces 38 comprising recesses 40.

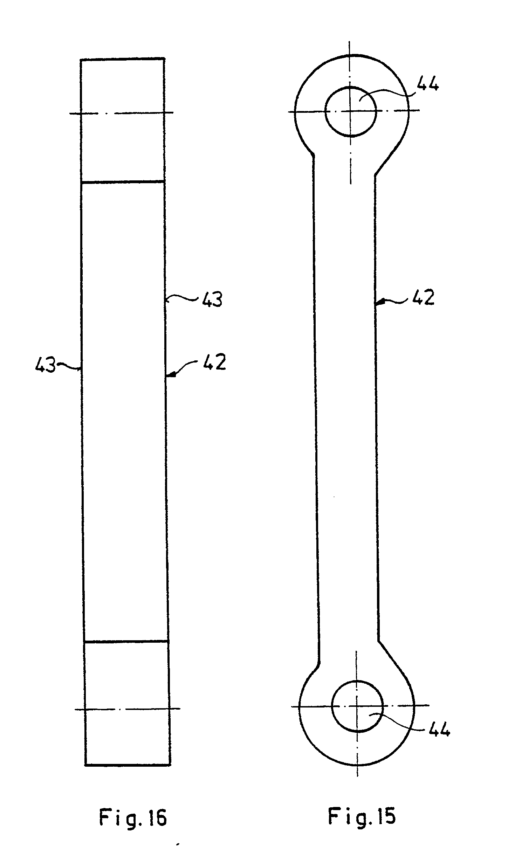

Figures 15 and 16 illustrate two characteristic views of a prefabricated precast die plate formed as a distance insert element 42. This element can be used together with the distance shoulder 35 of the holding plate 27, or the element 42 can substitute for said shoulder 35, ensuring greater distance for shaping inner places serving for receiving constructional units or other functional subsystems, and reaching a greater stroke-length. Holes 44 receive the clamping elements of the leading/fastening subsystem. The distance insert element 42 is limited by ground parallel adjusting surfaced 43.

## Claims

1. A prefabricated standardized die plate system for assembling of dies comprising holding plates (21, 27), forming plates (37) and insert plates (10, 15) for material distribution and ejection, said holding plates (21, 27) being provided with prefabricated holes (25, 26, 34, 36) for connecting elements, which holes (25, 26, 34, 36) are predetermined in dimension, number and geometrical arrangement of the holes, **characterized** in
   - that each forming plate (37) is provided with a group of holes (39) for fitted receiving of various cavity and/or core die inserts,
   - that each insert plate (10, 15) is provided with a group of holes (13, 17, 19, 20) for fitted receiving of various inserts comprising material nozzle system and/or material distributor hole system and/or hot runner system and/or ejector system,
   - that all said groups of holes are predetermined in dimension, number and geometrical arrangement of the holes, and
   - that said holding plates (21, 27), forming plates (37) and insert plates (10, 15) are moulded parts with all holes formed by the moulding.

2. A die plate system according to claim 1, wherein said forming plates (37) are provided with a moulded duct system for a tempering medium.

3. A die plate system according to claim 2, wherein said duct system comprises channel-like ducts (9) provided in a cylindrical surface of the holes (39) of said forming plate (37).

4. A die plate system according to claim 3, wherein said channel-like ducts (9) have spiral form.

## Revendications

1. Système de plaque-matrice normalisé, préfabriqué pour l'assemblage de filières comprenant des plaques de maintien (21, 27), des plaques de formage (37) et des plaques d'insert (10, 15) pour la répartition et l'éjection de la matière, ces plaques de maintien (21, 27) étant munies de trous préfabriqués (25, 26, 34, 36) destinés à relier des éléments, lesquels trous (25, 26, 34, 36) sont prédéterminés dans leur dimension, leur nombre et disposition géométrique, système caractérisé en ce que
   chaque plaque de formage (37) est munie d'un groupe de trous (39) destinés à recevoir en ajustage serré des cavités variables et/ou des inserts de filière,
   chaque plaque d'insert (10 15) est munie d'un groupe de trous (13, 17, 19, 20) destinés à recevoir en ajustage serré différents inserts comprenant un système de buse et/ou un système de trou de distributeur et/ou un système de buse de canal chaud et/ou un système d'éjecteur,
   tous ces groupes de trous sont prédéterminés en ce qui concerne les dimensions, le nombre et la disposition géométrique des trous, et
   les plaques de maintien (21, 27) les plaques de formage (37) et les plaques d'insert (10, 15) sont des pièces moulées avec tous les trous formés par le moulage.

2. Système de plaque-matrice selon la revendication 1, dans lequel les plaques de formage (37) sont munies d'un système de canalisation moulé pour un agent ou milieu de trempe ou revenu.

3. Système de plaque-matrice selon la revendication 2, dans lequel le système de canalisation comprend des conduits en forme de canaux (9) pratiqués dans une surface cylindrique des trous (39) de la plaque de formage (37).

4. Système de plaque-matrice selon la revendication 3, dans lequel les canalisations en forme de canaux (9) sont hélicoïdaux.

## Patentansprüche

1. Vorgefertigtes, standardisiertes Formplattensystem für den Zusammenbau von Formen, enthaltend Halteplatten (21, 27), Formplatten (37) und Einsetzplatten (10, 15) für die Materialverteilung und -ausbringung, wobei die Halteplatten (21, 27) mit vorgefertigten Löchern (25, 26, 34, 36) für Verbindungselemente versehen sind, welche Löcher (25, 26, 34, 36) in Abmessung, Anzahl und geometrischer Anordnung der Löcher vorbestimmt sind, dadurch **gekennzeichnet,**
   - daß jede Formplatte (37) mit einer Gruppe von Löchern (39) für die angepaßte Aufnahme von verschiedenen Hohlraum- und/oder Kernformeinsätzen versehen ist,
   - daß jede Einsetzplatte (10, 15) mit einer Gruppe von Löchern (13, 17, 19, 20) für die angepaßte Aufnahme von verschiedenen Einsätzen einschließlich eines Materialdüsensystems und/oder Materialverteilerlochsystems und/oder eines Heißkanalsystems und/oder eines Ejektorsystems versehen ist,

- daß sämtliche Gruppen von Löchern in Abmessung, Anzahl und geometrischer Anordnung der Löcher vorbestimmt sind, und

- daß die Halteplatten (21, 27), die Formplatten (37) und die Einsetzplatten (10, 15) Formteile sind, wobei sämtliche Löcher durch das Formen gebildet sind.

2. Formplattensystem nach Anspruch 1, bei dem die Formplatten (37) mit einem Formleitungssystem für ein Temperiermittel versehen sind.

3. Formplattensystem nach Anspruch 2, bei dem das Leitungssystem kanalartige Leitungen (9) umfaßt, die in einer Zylinderfläche der Löcher (39) der Formplatte (37) vorgesehen sind.

4. Formplattensystem nach Anspruch 3, bei dem die kanalartigen Leitungen (9) Spiralform aufweisen.

Fig. 2

Fig. 1

Fig. 3

11

IV.↓

↓IV

10

12    13    14    VI.    12    Fig.5

10

12

V.

14

11

12    Fig.6

10

V.↑

12

VI.    Fig.4

Fig. 8

Fig. 7

11

Fig. 10

Fig. 9

Fig. 12

Fig. 11

Fig. 14

Fig. 13

14

Fig.16

Fig.15